# EUROPÄISCHE PATENTSCHRIFT

(11) **EP 1 300 598 B1**
(45) Veröffentlichungstag und Bekanntmachung des Hinweises auf die Patenterteilung: **06.07.2005**
(21) Anmeldenummer: 02021415.1
(22) Anmeldetag: 25.09.2002
(51) Int. Cl.: F16B 43/00, F16B 41/00

(54) **Lösbares Passverbindungselement für ein Bauteil, mit einer Passschraube und einem Stützring**
Releasable piece centering connector having a calibrated screw and a support ring
Elément comprenant une vis de calibrage et une bague d'appui pour la liaison réversible centrée d'une pièce

(30) Priorität: 04.10.2001 DE 10149017
(43) Veröffentlichungstag der Anmeldung: 09.04.2003
(73) Patentinhaber: Kamax-Werke Rudolf Kellermann GmbH & Co. KG, 37520 Osterode am Harz (DE)
(72) Erfinder: Sommer, Wolfgang, 35285 Gemünden (Wohra) (DE); Wittich, Uwe, 36320 Kirtorf (DE)
(74) Vertreter: Rehberg Hüppe + Partner

(56) Entgegenhaltungen:
- DE-A- 3 042 139
- DE-U- 8 424 430
- DE-U- 9 016 087
- US-A- 2 371 463
- US-A- 3 476 010

## Beschreibung

Die Erfindung betrifft ein lösbares Passverbindungselement für ein Bauteil, mit einer einen Kopf und einen Schaft mit einem Gewindeabschnitt und einem Passabschnitt aufweisenden Passschraube und einem eine Durchbrechung aufweisenden Stützring. Die Erfindung lässt sich allgemein bei der Verbindung von Bauteilen anwenden. Sie kann insbesondere auch in Verbindung mit einer Passschraube eingesetzt werden, der dann der Stützring zugeordnet ist. Der Stützring wird bei der Montage mit der Passschraube zusammengebracht Die Verbindung kann so gestaltet sein, dass sich der Stützring nicht nur relativ zu der Passschraube verdrehen kann, sondern dass im Rahmen eines vorgesehenen Bewegungsspiels ein radialer Versatz der Achsen von Passschraube und Stützring gegeneinander möglich ist. Dies beschränkt sich freilich auf einen engen Bereich, wie er beispielsweise zum Ausgleich von Teilungsfehlern der Durchbrechung der Radschüssel und/oder der Nabe sinnvoll ist. Das lösbare Passverbindungselement für ein Bauteil kann aber auch in anderem Zusammenhang eingesetzt werden, bei dem es auf die Erfüllung anderer Funktionen ankommt.

Passschrauben haben bekanntlich am Schaft einen Passabschnitt und einen Gewindeabschnitt. Der Passabschnitt hat einen größeren Außendurchmesser als der Außendurchmesser des Gewindeabschnitts. Der Passabschnitt dient dazu, die Passschraube in eingeschraubtem Zustand am Bauteil genauer zu positionieren als dies bei normalen Schrauben ohne Passabschnitt möglich ist. Passschrauben werden in Verbindung mit losen Stützringen, beispielsweise in Form von Unterlegscheiben, eingesetzt und verbaut. Dabei wird der Stützring vor dem Eindrehen der Passschraube in das Bauteil über den Schaft der Passschraube geschoben. Es müssen also bei der Montage zwei Elemente gehandhabt und zusammengebracht werden. Dies ist insbesondere bei maschineller Montage hinderlich, aufwändig und unsicher.

Der Erfindung liegt die Aufgabe zugrunde, ein lösbares Passverbindungselement der eingangs beschriebenen Art bereitzustellen, dessen Passschraube einerseits und dessen Stützring andererseits je für sich vollständig hergestellt und bearbeitet werden können und die nach ihrer Vormontage durch Zusammenfügung drehbar und unverlierbar aneinander gehalten sind. Dabei soll in am Bauteil montiertem Zustand des Passverbindungselements der von dem Stützring nicht abgedeckte Teil des Schaftes der Passschraube zur Erbringung der Passfunktionen nutzbar sein.

Erfindungsgemaß wird dies durch ein lösbares Passverbindungselement mit den Merkmalen des Anspruchs 1 erreicht.

Die Erfindung geht von dem Gedanken aus, die Passschraube an ihrem Schaft mit einem Rand und den Stützring mit einer Verengung auszustatten. Die Verengung ist in der Durchbrechung des Stützrings angeordnet und dem Rand an der Passschraube mit Überdeckung zugeordnet. Der Rand an der Passschraube und die Verengung an dem Stützring sind so angeordnet und bemessen, dass der Stützring nach dem Zusammenfügen mit der Passschraube an dieser drehbar und unverlierbar gehalten ist. Dabei ist der Rand am Schaft der Passschraube so positioniert, dass er sich im zusammengefügten Zustand im Innern der Durchbrechung des Stützrings befindet und die Verengung in der Durchbrechung des Stützrings in einem dem Kopf der Passschraube zugekehrten Bereich angeordnet ist. Der Rand und die Verengung sind in ihrer Überdeckung so bemessen, dass die Passschraube und der Stützring unter elastisch-plastischer Verformung des Randes und/oder der Verengung zusammenfügbar sind. Damit ist nicht nur die Verengung des Stützrings, sondern auch der vorspringende Rand am Schaft der Passschraube in einem solchen Bereich angeordnet, dass er sich in vormontiertem Zustand innerhalb der axialen Erstreckung des Stützrings befindet. Damit ist der Rand nach der Zusammenfügung zwischen Rand und Stützring bei der Vormontage von außen nicht mehr sichtbar. Das Gleiche gilt dann auch für den montierten Zustand des Passverbindungselementes am Bauteil. Damit wird der aus dem Stützring herausschauende Teil des Schaftes frei von dem Rand und wird zur Anordnung des Passabschnitts nutzbar. Es ist also möglich, an dieser Stelle den Passabschnitt zu verwirklichen, um die Zentrierfunktion zwischen der Achse der Passschraube und dem Bauteil herbeizuführen. Die Passschraube einerseits und der Stützring andererseits können je für sich komplett hergestellt werden. Sie können insbesondere aus unterschiedlichen Materialien gefertigt werden und auch mit unterschiedlichen Beschichtungen versehen sein. In der Vormontage werden die beiden Teile nur noch zusammengefügt. Dies geschieht durch axiale Bewegung relativ zueinander. Ein nachträgliches Verstemmen entfällt. Während dieser Vormontage wird eine plastische Verformung, der eine elastische Verformung vorangeht, zwischen Rand und Verengung genutzt, um den Stützring sicher und unverlierbar sowie trotzdem drehbar an der Passschraube festzulegen. Geringfügige Abstreifkräfte, wie sie bei Nutzung einer nur elastischen Verformung zum ungewollten Lösen der Teile voneinander führen können, reichen bei plastischer Verformung nicht aus, um die Teile ungewollt auseinandertreten zu lassen. Damit ist dann auch sichergestellt, dass die vormontierte Lage des Passverbindungselementes bis zu seiner unmittelbaren Nutzung in der Montage, also dem Einschrauben in ein Bauteil, verlässlich beibehalten wird. Bei dem neuen Passverbindungselement ist sogar eine doppelte Zentrierwirkung möglich, nämlich einerseits zwischen einem Passabschnitt am Schaft der Passschraube und dem Bauteil und zum anderen zwischen Stützring und Passschraube. Dies ist dadurch bedingt, dass nunmehr auch der Rand in vormontiertem und in montiertem Zustand innerhalb der axialen Erstreckung des Stützrings liegt. Der Rand an der Passschraube und die Verengung in der Durchbrechung des Stützrings müssen sich nicht unbedingt vollständig um 360° umlaufend erstrecken. Der Rand und die Verengung können auch - über den Umfang gesehen - gelegentlich unterbrochen sein. Für die sinnvolle Nutzung der elastisch-plastischen Verformung ist es jedoch erforderlich, dass sowohl der Rand wie auch die Verengung sich über eine wesentliche Umfangslänge erstrecken.

Zwar ist aus der DE 298 19 782 U1 ein lösbares Verbindungselement in Form eines kombinierten Befestigungselements bekannt, das eine Schraube und einen Stützring aufweist. Die Schraube weist einen Kopf und einen Schaft auf. Der Kopf besitzt eine Schlüsselangriffsfläche und eine Abstützfläche zur Übertragung der Axialkraft auf den Stützring. Der Schaft der Schraube weist einen an seinem freien Ende angeordneten Gewindeabschnitt und einen radial nach außen vorspringenden Rand auf. Der Rand ist axial gesehen im Anschluss an das Ende des Gewindeabschnitts unter Einschaltung des üblichen Übergangs angeordnet. Der axiale Abstand des Randes von der Abstützfläche des Kopfes ist größer als die axiale Höhe des Stützrings. Der Durchmesser des Randes ist größer als der Durchmesser des Schaftes. Der Stützring weist eine sich axial erstreckende kreisrund ausgebildete Durchbrechung auf. An dem dem Kopf der Schraube abgekehrten Ende der Durchbrechung weist der Stützring eine dem Rand der Schraube mit Überdeckung zugeordnete Verengung auf. Der Durchmesser der Verengung ist sowohl größer als der Durchmesser des Schaftes als auch der Außendurchmesser des Gewindeabschnitts. Der Stützring ist im Bereich des Durchmessers der Verengung elastisch aufweitbar. Beim Einsatz bestimmter Materialien kann neben der elastischen Verformung auch ein plastischer Verformungsanteil zugelassen werden. Der Rand an der Schraube und die Verengung an dem Stützring sind derart geometrisch aufeinander abgestimmt gestaltet, dass der Stützring mit der Verengung vom freien Ende des Schaftes her über den Rand geführt, jedoch gegensinnig nicht zurückbewegt werden kann. Auf diese Weise soll der Stützring nach dem Zusammenfügen mit der Schraube an dieser drehbar und unverlierbar gehalten sein. Ein solches rein elastisches Aufweiten der Verengung des Stützrings erscheint, wenn überhaupt, dann nur unter Einhaltung enger, entsprechend bemessener Toleranzen denkbar und ggf. praktisch durchführbar. Dann sind aber auch die Abstreifkräfte, die zu einem ungewollten Trennen des Stützrings von der Schraube führen können, sehr gering. Das Zusammenfügen zwischen Schraube und Stützring geschieht durch einen Press- oder Schlagvorgang. Durch den Kontakt zwischen Rand und Verengung tritt eine gewisse Beschädigung ein, sodass bereits sehr geringe Abstreifkräfte, wie sie beim Transport der zusammengefügten Verbindungselemente auftreten können, die Gefahr eines ungewollten Lösens entstehen lassen. Da die Einhaltung entsprechend eng bemessener Toleranzen mit geringer Überdeckung Voraussetzung für das rein elastische Aufweiten der Verengung des Stützrings ist, besteht auch die Gefahr, dass vor und bei der Montage des zusammengefügten Verbindungselements am Bauteil ein ungewolltes Verklemmen zwischen Schraube und Stützring eintritt. Ein weiterer Nachteil dieses bekannten Verbindungselements besteht darin, dass der Rand am Schaft der Schraube nach dem Zusammenfügen der Teile sichtbar ist und sich an einer Stelle befindet, an der er erwünschte Funktionen des Schaftes der Schraube, insbesondere die Anordnung eines Passabschnitts, unmöglich macht. So lässt sich beispielsweise ein Passverbindungselement mit einer Passschraube nicht verwirklichen.

Aus der DE 37 84 325 T2 ist ein lösbares Verbindungselement für ein Bauteil bekannt, welches aus drei Elementen zusammengesetzt ist, nämlich einer Schraube, einer Hülse und einem Formteil aus Gummi oder anderem elastischen Material. Die Hülse besitzt einen axial langgestreckten zylindrischen Teil und einen dem Kopf der Schraube zugekehrten Kragen. Im Bereich des Kragen ist eine Verengung gebildet, die um 360° umlaufend angeordnet ist. Der Schaft der Schraube besitzt im Anschluss an den Kopf einen zylindrischen Schaftabschnitt und im Bereich ihres freien Endes im Anschluss an einen Einführkegel, einen Gewindeabschnitt. Zwischen dem zylindrischen Schaftabschnitt und dem Gewindeabschnitt sind mehrere radiale Vorsprünge oder Flügel angeordnet, die über den Umfang verteilt angeordnet sind. Zwischen den Vorsprüngen an der Schraube und der Verengung an der Hülse besteht Überdeckung. Die Schraube und die Hülse werden zunächst vormontiert, indem sie unter elastischer Aufweitung übereinandergeschoben werden, so dass die Verengung an der Hülse über die Vorsprünge bzw. Flügel am Schaft der Schraube schnappt, um die Hülse auf dem Befestiger zu sichern. Damit ist die Hülse relativ zur Schraube unter großer axialer Beweglichkeit dieser beiden Teile zueinander festgelegt, wie es für die Montage am Bauteil erforderlich ist. Die elastische Aufweitung der Teile ist mit den gleichen Nachteilen verbunden, wie dies weiter oben beschrieben wurde. Die Anordnung der Flügel verhindern die Anordnung eines Passabschnitts einer Passschraube.

Ein weiteres lösbares Verbindungselement ist in einer speziellen Anwendung als Radschraube aus der EP 0 836 016 B1 bekannt. Die Radschraube besitzt einen Kopf und einen Schaft, der mit einem Gewindeabschnitt versehen ist. Der Stützring dient der verbesserten Übertragung der Axialkraft der Radschraube auf das Bauteil. Der Stützring weist auf der dem Fahrzeugrad zugekehrten Seite eine kegelstumpfförmige oder auch kugelförmig ausgebildete Anlagefläche für die Übertragung der Axialkraft auf das Fahrzeugrad auf. Die Schraube weist an ihrem Schaft einen um 360° umlaufenden radial nach außen vorspringenden Rand auf. Der Rand ist zwischen einem zylindrischen Teil des Schaftes und einem am freien Ende des Schaftes beginnenden Gewindeabschnitt angeordnet. Der Stützring besitzt eine Durchbrechung, deren Durchmesser größer als der Außendurchmesser des Gewindeabschnitts und auch größer als der Durchmesser des Randes ausgebildet ist. Zur Vormontage wird der Stützring axial über die Schraube geschoben und anschließend über mindestens eine Verstemmung plastisch verformt. Damit ist der Stützring drehbar an der Radschraube gelagert und unverlierbar gehalten. In der Regel werden vier Verstemmungen über den Umfang verteilt angebracht. Auch hierbei liegt der Rand der Schraube in am Bauteil montiertem Zustand des Verbindungselements außerhalb des Bereiches des Stützrings, sodass dieser Schaftbereich für die Erfüllung anderer Funktionen nicht nutzbar ist. Die plastische Verformung bei der Verstemmung des Stützrings stellt einen zusätzlich zu der Herstellung der Schraube und des Stützrings zu erbringenden Arbeitsschritt dar. Vorteilhaft wird dabei aber eine gesicherte unverlierbare Lage des Stützrings an der Schraube erreicht, die nur durch hohe Abstreifkräfte unter erneuter plastischer Verformung der Teile gewollt aufgehoben werden kann.

Aus der DE 30 00 697 A1 ist eine Befestigungseinheit zum Befestigen von Kunststoffmaterial an einem relativ dünnen Bauteil bekannt. Es wird ein selbstschneidendes Befestigungselement mit einem Schaft eingesetzt, der Gewindegänge aufweist, die in das Bauteil einschneiden. Zum Festhalten des Kunststoffmaterials und zur Übertragung der Axialkraft auf das Bauteil ist ein in seiner Höhe auf die Dicke des Kunststoffmaterials abgestimmtes Distanzstück vorgesehen. Das Distanzstück durchsetzt ein Loch in dem Kunststoffmaterial und weist innerhalb einer Durchbrechung eine dem Kopf der Schneidschraube zugekehrte Verengung auf. In Zuordnung dazu besitzt der Schaft der schneidenden Schraube im Anschluss an den Gewindegang einen vorspringenden umlaufenden Rand. In der montierten Stellung erstrecken sich die Gewindegänge der Schneidschraube axial bis in die Durchbrechung des Distanzstücks hinein, so dass auch hier keine Möglichkeit besteht, einen Passabschnitt unterzubringen, ganz abgesehen davon, dass bei solchen selbstschneidenden Befestigungselementen, die im Zusammenhang mit vergleichsweise geringerwertigen Verbindungen eingesetzt werden, Passabschnitte nicht vorkommen. Immerhin aber erlaubt es der am oberen Ende des Gewindegangs vorgesehene vorspringende Rand und die nach innen vorspringende Verengung an dem Distanzstück, die Teile in einer Vormontage zusammenzufügen, bei der das Distanzstück über den Rand an der Schneidschraube schnappt.

Bei dem neuen Passverbindungselement weist die Durchbrechung des Stützrings einen größeren Durchmesser als der Durchmesser des Schaftes und des Gewindeabschnitts der Passschraube auf. Der Durchmesser der Durchbrechung des Stützrings ist auch größer als der Durchmesser des Randes am Schaft der Passschraube oder sonstiger am Schaft der Passschraube ausgebildeter Vorsprünge. Auf diese Weise lässt sich der Stützring axial auf den Schaft der Passschraube aufschieben. Der Rand an der Passschraube und die Verengung an dem Stützring treten axial miteinander in Kontakt. Es ist eine entsprechend den Toleranzen sich ergebende Kraftschwelle zu überwinden, wobei eine plastische Verformung im Bereich des Randes und/oder der Verengung auftritt. In der Regel wird sich sowohl der Rand wie auch die Verengung plastisch verformen. Jeder plastischen Verformung geht eine elastische Verformung voraus, die aber im vorliegenden Fall gezielt überschritten wird. Mit der Beendigung der plastischen Verformung ist der Rand über die Verengung axial hinübergetreten und das Rückstellvermögen der Materialien der Passschraube und des Stützrings erbringen die gesicherte unverlierbare Stellung in diesem vormontierten Zustand.

Die Verengung in der Durchbrechung des Stützrings ist mit axialem Abstand zu dem dem Kopf der Passschraube abgekehrten Ende des Stützrings angeordnet. Die Verengung der Durchbrechung wird also gerade nicht am unteren Ende des Stützrings verwirklicht, sondern zumindest in einer solchen Entfernung, dass der Rand der Passschraube in der vormontierten Stellung in der Durchbrechung des Stützrings unterbringbar ist. Besonders sinnvoll ist es, wenn die Verengung der Durchbrechung des Stützrings in dem dem Kopf der Passschraube zugekehrten Endbereich vorgesehen ist. Dies hat den Vorteil, dass sich die Verengung an der Durchbrechung in sehr einfacherer Weise durch eine Kaltumformung herstellen lässt. Es ist aber auch möglich, die Verengung im mittleren Bereich der axialen Höhe des Stützrings anzuordnen. Derartige Formgebungen können auch durch Drehen hergestellt werden. Sie erbringt eine verbesserte Zentrierwirkung zwischen Stützring und der Achse der Passschraube, wenn der Stützring an der Abstützfläche des Kopfes anliegt, wie dies in montiertem Zustand der Fall ist.

In Abstimmung hierauf ist der Rand am Schaft der Passschraube in einem axialen Abstand zum Kopf der Passschraube angeordnet, der kleiner als die axiale Höhe des Stützrings ist. Damit ist dann sichergestellt, dass der Rand am Schaft der Passschraube in montiertem Zustand axial innerhalb der Erstreckung und Anordnung des Stützrings liegt. Trotzdem kann in vormontiertem Zustand eine hinreichend axiale Beweglichkeit zwischen Passschraube und Stützring verwirklicht werden.

In bevorzugter Ausführungsform ist der radial nach außen vorspringende Rand am Schaft der Passschraube über 360° umlaufend vorgesehen. In Verbindung damit, aber auch unabhängig davon, ist die radial nach innen vorspringende Verengung in der Durchbrechung des Stützrings über 360° umlaufend vorgesehen. Damit verteilt sich die plastische Verformung gleichmäßig über den Umfang. Bei der Vormontage tritt vorteilhaft eine Zentrierwirkung zwischen Passschraube und Stützring ein.

Bei dem neuen Passverbindungselement ist der Teil des Schaftes der Passschraube, der in montiertem Zustand die axiale Höhe des Stützrings überragt, für die Anordnung des Passabschnitts voll genutzt. So weist die Passschraube an ihrem Schaft den Passabschnitt auf, der sogar axial länger als die axiale Höhe des Stutzrings gestaltet oder angeordnet sein kann. Unter einem Passabschnitt wird allgemein ein genauer bearbeiteter und toleranzmäßig festgelegter, vorzugsweise zylindrischer Abschnitt des Schaftes der Passschraube verstanden, der zur Erbringung einer Zentrierwirkung zwischen der Achse der Passschraube und dem Bauteil erforderlich oder sinnvoll ist. Beispielsweise kann die Durchbrechung im Bauteil oder ein Abschnitt einer Durchbrechung im Bauteil, der von der Passschraube durchsetzt wird, durchmessermäßig auf den Durchmesser des Passabschnittes abgestimmt sein, so dass die montierte Passschraube den gewünschten eng begrenzten korrekten Sitz am Bauteil erhält. Damit kann auch eine Zentrierwirkung zwischen mehreren Teilen des Bauteils herbeigeführt werden.

Zur Erleichterung des Zentrierens und des Zusammenfügens zwischen Passschraube und Stützring bei der Vormontage kann der Rand und/oder die Verengung konische Flächenbereiche aufweisen. Damit tritt bei der Vormontage automatisch eine Zentrierwirkung zwischen Passschraube und Stützring ein. Die elastisch-plastische Verformung wird erleichtert und die für die plastische Verformung erforderliche Überschreitung der Kraftschwelle liegt optimal niedrig. Die konischen Flächenbereiche sind in der Regel kegelstumpfförmig ausgebildet.

Am Schaft der Passschraube können auch zwei oder mehr Ränder und/oder in der Durchbrechung des Stützrings zwei oder mehr Verengungen angeordnet sein. Die Ränder einerseits und die Verengungen andererseits können vorteilhaft auch auf unterschiedlichem Durchmesserniveau angeordnet sein, um jeden Rand mit seiner zugehörigen Verengung nur einmal plastisch zu verformen. Bei dieser Ausführungsform ergibt sich eine erhöhte zentrierte Ausrichtung zwischen Passschraube und Stützring. Dies erleichtert nicht nur beispielsweise eine Robotermontage, sondern stellt auch sicher, dass die Vorspannkraft der Passschraube im montierten Zustand gleichmäßig über den Stützring übertragen wird. Ein weiterer Vorteil dieser Ausführungsform besteht darin, dass Radialkräfte vom Stützring direkt in den Schaft der Passschraube eingeleitet werden können.

Die Erfindung wird anhand bevorzugter Ausführungsbeispiele weiter erläutert und beschrieben. Es zeigen:
- Fig. 1: eine Seitenansicht einer Passschraube,
- Fig. 2: eine Schnittdarstellung einer Passschraube und eines Stützrings des Passverbindungselementes im Bereich ihrer gegenseitigen Verbindung,
- Fig. 3: eine vergrößerte Darstellung einer Einzelheit zwischen Passschraube und Stützring bei einer zweiten Ausführungsform,
- Fig. 4: die Darstellung einer dritten Ausführungsform des Passverbindungselements,
- Fig. 5: einen Schnitt im Verbindungsbereich zwischen der Passschraube gemäß Fig. 4 und einem zugeordneten Stützring,
- Fig. 6: einen Schnitt im Verbindungsbereich zwischen der Passschraube und einem zugeordneten Stützring bei einer weiteren Ausführungsform, und
- Fig. 7: eine Detaildarstellung aus Fig. 6 in vergrößertem Maßstab.

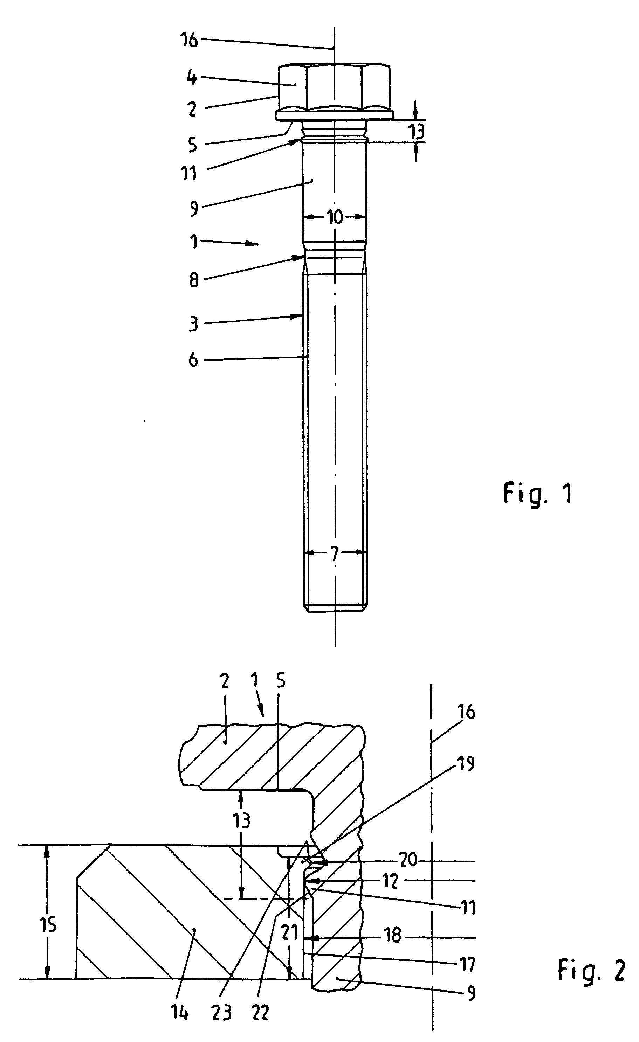

Fig. 1 zeigt eine Passschraube 1. Die Passschraube 1 weist einen Kopf 2 und einen Schaft 3 auf. Der Kopf 2 besitzt eine Schlüsselangriffsfläche 4 und eine Abstützfläche 5, die zur Übertragung der Axialkraft dient. Der Schaft 3 ist in an sich bekannter Weise als langgestreckter etwa zylindrischer Körper ausgebildet. Er weist, beispielsweise beginnend an seinem freien, dem Kopf 2 abgekehrten Ende einen Gewindeabschnitt 6 auf. Der Gewindeabschnitt 6 besitzt einen Außendurchmesser 7. Der Gewindeabschnitt 6 endet an einem Übergang 8. Der Schaft 3 geht im Anschluss an den Übergang 8 in einen Passabschnitt 9 über, der einen Durchmesser 10 besitzt. Der Durchmesser 10 ist größer als der Außendurchmesser 7 des Gewindeabschnitts 6. Im Bereich des Passabschnittes 9 befindet sich ein radial nach außen vorspringender ausgearbeiteter Rand 11, der einen Durchmesser 12 (Fig. 2) aufweist. Der Rand 11 ist mit seinem dem freien Ende des Schaftes 3 zugekehrten Teil in einem Abstand 13 von der Abstützfläche 5 des Kopfes 2 der Passschraube 1 angeordnet. Der Rand 11 kann als vorspringender Wulst ausgebildet sein. Der Rand 11 lässt sich um 360° umlaufend, beispielsweise durch Walzen kaltverformend herstellen. Aus Fig. 2 ist die Materialverdrängung bei der Ausbildung des Randes 11 aus dem Material des Passabschnittes 9 erkennbar. Fig. 2 lässt auch erkennen, dass der Passschraube 1 ein Stützring 14 zugeordnet ist. Der Stützring 14 ist neben der Passschraube 1 das zweite wesentliche Teil des lösbaren Passverbindungselementes. Der Stützring 14 ist als ringförmiger scheibenartiger Körper ausgebildet. Er weist eine Höhe 15 auf. Die Höhe 15 ist größer oder zumindest gleich dem Abstand 13. Der Stützring 14 besitzt koaxial zu einer gemeinsamen Achse 16 der Passschraube 1 und des Stützrings 14 eine Durchbrechung 17 mit einem Durchmesser 18. Indem dem Kopf 2 der Passschraube 1 zugekehrten Endbereich der Durchbrechung 17 weist der Stützring 14 eine Verengung 19 auf, die einen Durchmesser 20 besitzt. Der Durchmesser 20 ist kleiner als der Durchmesser 18 der Durchbrechung 17. Der Durchmesser 20 der Verengung 19 ist auch kleiner als der Durchmesser 12 des Randes 11. Die Differenz zwischen den Durchmessern 12 und 20 wird als Überdeckung bezeichnet. Diese Überdeckung ist so gewählt, dass die Passschraube 1 und der Stützring 14 nur unter plastischer Verformung im Bereich des Randes 11 und/oder der Verengung 19 in den vormontierten Zustand überführt werden können, der in Fig. 2 dargestellt ist. Die Verengung 19 ist gemäß Fig. 2 im oberen Bereich des Stützrings 14 angeordnet, und zwar in einem Abstand 21 von dem dem Kopf 2 der Passschraube 1 abgekehrten axialen Ende des Stützrings 14. Die geometrische Abstimmung zwischen der Anordnung des Randes 11, der Höhe 15 des Stützrings 14 und der Anordnung der Verengung 19 ist immer so, dass der Rand 11 bei an der Abstützfläche 5 anliegendem Stützring 14 sich immer noch vollständig in der Durchbrechung 17 befindet, also von außen nicht sichtbar ist. Damit ist in dem Ausführungsbeispiel der Fig. 1 und 2 auch sichergestellt, dass der sich anschließende Passabschnitt 9 seine Passfunktion an einem Bauteil voll erfüllen kann. Der Rand 11 kann im Anschluss an seinen größten Durchmesser 12 einen konischen Flächenbereich 22 aufweisen. Auch die Verengung 19 kann im Anschluss an ihren geringsten Durchmesser 20 einen konischen Flächenbereich 23 besitzen. Diese Flächenbereiche 22 und 23 dienen dem erleichterten Vormontieren des Passverbindungselementes.

Die beiden wesentlichen Teile des Passverbindungselementes, nämlich die Passschraube 1 und der Stützring 14, werden je für sich vollständig hergestellt. Hierbei erhalten Sie ihre Gestalt und je nach den Anforderungen auch eine Oberflächenbeschichtung oder dergleichen. Die Vormontage zu dem Passverbindungselement geschieht in der Weise, dass der Stützring axial in Richtung der Achse 16 vom freien Ende des Schaftes 3 her auf diesen aufgefädelt wird. Da der Durchmesser 20 der Verengung 19 größer ist als der Außendurchmesser 7 des Gewindeabschnitts 6 und auch größer als der Durchmesser 10 des Passabschnittes 9, lässt sich das Auffädeln kraftlos durchführen, bis die Verengung 19 an dem Rand 11 zur Anlage kommt. Dieser Aufschiebe- bzw. Aufpressvorgang wird dann fortgesetzt, wobei sich der Rand 11 und/oder die Verengung 19 plastisch verformen. Der Stützring 14 tritt dabei mit seiner Verengung 19 über den Rand 11 hinüber und gelangt in eine Stellung, wie sie in Fig. 2 dargestellt ist. Dies ist der vormontierte Zustand. Das Passverbindungselement wird in diesem Zustand zu seiner Verarbeitungsstelle transportiert, und gelangt so beispielsweise zu einem Fließband in der Automobilherstellung. Es wird dann an dem Automobil an einem dort vorgesehenen Bauteil eingesetzt und eingeschraubt, wobei der Passabschnitt 9 an dem Bauteil (nicht dargestellt) seine zentrierende Passfunktion erbringen kann.

Die für die Erfindung wichtigen geometrischen Abmessungen können anhand eines Ausführungsbeispieles der Passschraube 1 und des Stützrings 14 gemäß den Figuren 1 und 2 wie folgt ausgebildet sein. Die Passschraube 1 besitzt einen Schaft entsprechend der Länge mit einem Gewindeabschnitt 6 des Gewindes M14x1,5. Der Außendurchmesser 7 des Gewindeabschnitts beträgt 14,0 mm. Der Passabschnitt 9 weist einen Durchmesser 14-0,27 mm auf. Der Durchmesser 12 beträgt 14,65-0,1 mm. Der Durchmesser 18 beträgt 14,7+0,1 mm. Der Durchmesser 20 beträgt 14,4-0,1 mm.

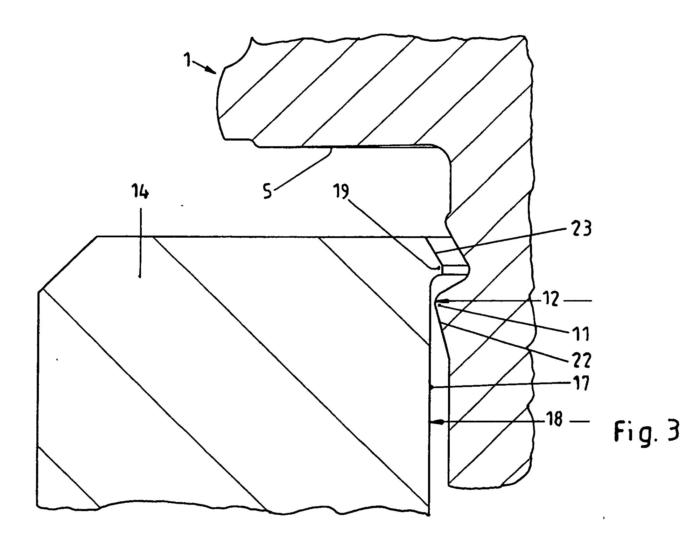

Das in Fig. 3 dargestellte zweite Ausführungsbeispiel weist in durchaus ähnlicher Weise eine Passschraube 1 und einen Stützring 14 auf, so dass diesbezüglich auf die vorangehende Beschreibung verwiesen werden kann. Die Verengung 19 in der Durchbrechung 17 an dem Stützring 14 ist hier nicht durch Kaltumformung, sondern durch Drehen des Stützrings 14 im Bereich der Durchbrechung 17 hergestellt. Auch bei diesem Ausführungsbeispiel befindet sich die Verengung 19 in einem dem Kopf 2 der Passschraube 1 zugekehrten Endbereich des Stützrings 14.

Auch bezüglich der Vormontage (Fig. 3) kann auf das Ausführungsbeispiel der Fig. 1 und 2 verwiesen werden.

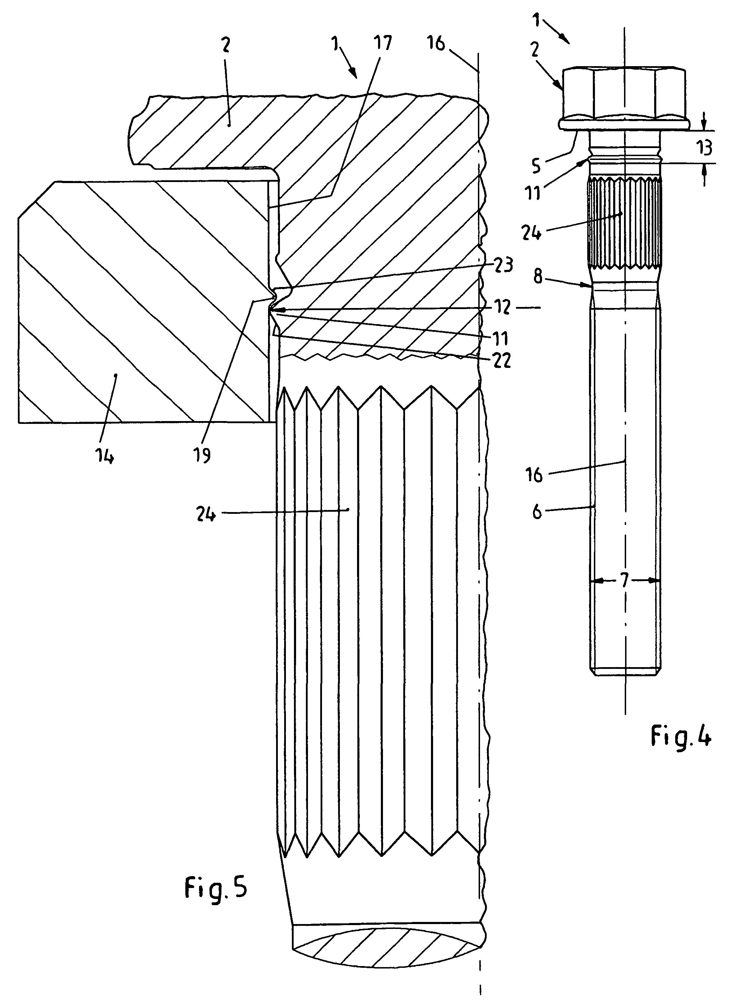

Die Fig. 4 und 5 zeigen ein drittes Ausführungsbeispiel, welches wiederum grundlegend ähnlich gestaltet ist. Der Schaft 3 besitzt hier als Passabschnitt zwischen dem Gewindeabschnitt 6 und dem Kopf 2 eine sich in axialer Richtung erstreckende Rändelung 24. Die Verengung 19 im Bereich der Durchbrechung 17 ist hier etwa auf mittlerer axialer Höhe des Stützrings 14 angeordnet. Entsprechend ist der Abstand 13 des Randes 11 von der Abstützfläche 5 bemessen. Auch hier sind die geometrischen Verhältnisse wieder so aufeinander abgestimmt, dass bei an der Abstützfläche 5 anliegendem Stützring 14, wie dies in am Bauteil montiertem Zustand der Fall ist, sowohl der Rand 11 wie auch die Verengung 19 unsichtbar im Stützring 14 liegen, so dass die Rändelung 24 an dem aus dem Stützring 14 herausschauenden Teil des Schaftes 3 voll ihre Funktion erbringen kann.

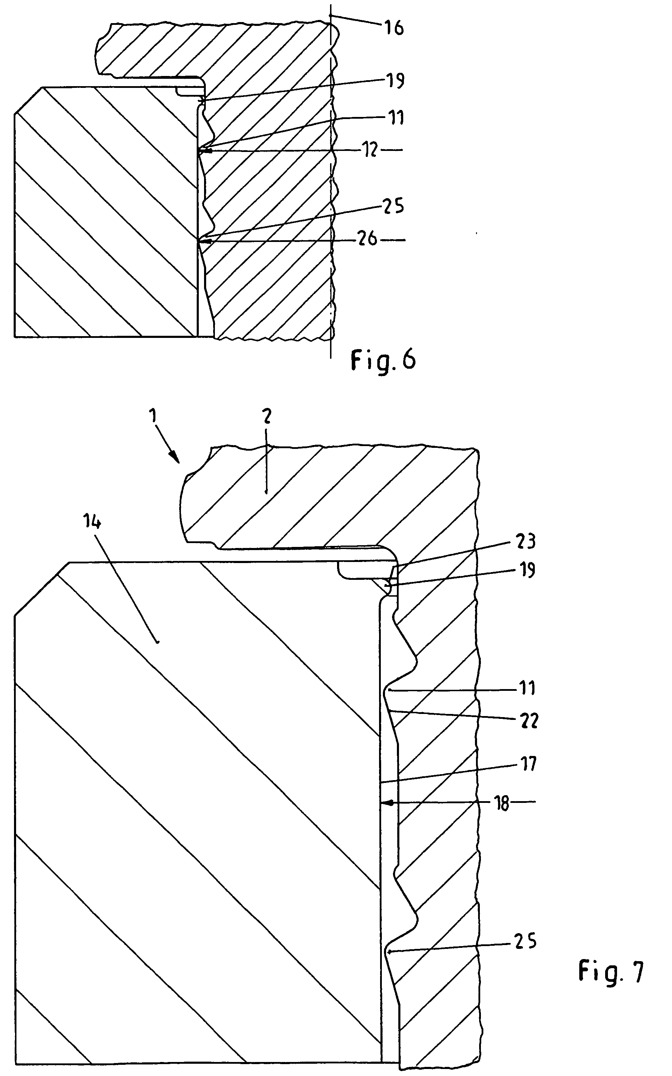

In den Fig. 6 - 7 ist ein weiteres Ausführungsbeispiel dargestellt. Dieses baut auf den vorangehenden Ausführungsbeispielen auf und weicht insofern ab, als die Passschraube 1 neben dem Rand 11 einen zweiten Rand 25 besitzt, der einen Durchmesser 26 aufweist. Die Durchmesser 12 und 26 können gleich ausgebildet sein. Es ist aber auch möglich, den Durchmesser 12 etwas größer als den Durchmesser 26 zu wählen. In allen Fällen muss dies auf den Durchmesser 20 der Verengung 19 abgestimmt sein. Ebenso wie es möglich ist, die Anzahl der Ränder 11 und 25 zu erhöhen, ist es auch möglich, mehrere Verengungen 19 axial und in Zuordnung über die Höhe 15 des Stützrings 14 verteilt anzuordnen. Dabei ist es zweckmäßig, die geometrische Ausbildung so zu wählen, dass nur jeweils das zugeordnete Paar aus Rand und Verengung bei der Vormontage miteinander in Kontakt kommt. Das Ausführungsbeispiel der Fig. 6 - 7 weist den besonderen Vorteil auf, dass eine gute Zentrierwirkung zwischen Stützring 14 und Passschraube 1 in vormontiertem Zustand eintritt. In Verbindung mit einem Passabschnitt, der hier nicht dargestellt ist, kann zusätzlich eine entsprechende Zentrierwirkung zwischen Passschraube 1 und dem Bauteil erfolgen.

Bei allen Ausführungsformen ergeben sich verschiedene Möglichkeiten zur Realisierung der Ränder 11, 25 und der Verengungen 19. Eine bevorzugte Ausführungsform besteht in einer wulstmäßigen Ausbildung, die über den Umfang um 360° umlaufend mit konstantem Querschnitt gestaltet ist. Diese Ausbildung ist für eine gleichmäßige elastisch-plastische Verformung besonders sinnvoll. Es ist jedoch auch möglich, die Ränder 11 und die Verengungen 19 örtlich geringfügig zu durchbrechen.

### BEZUGSZEICHENLISTE

- 1: Passschraube
- 2: Kopf
- 3: Schaft
- 4: Schlüsselangriffsfläche
- 5: Abstützfläche
- 6: Gewindeabschnitt
- 7: Außendurchmesser
- 8: Übergang
- 9: Passabschnitt
- 10: Durchmesser

- 11: Rand
- 12: Durchmesser
- 13: Abstand
- 14: Stützring
- 15: Höhe
- 16: Achse
- 17: Durchbrechung
- 18: Durchmesser
- 19: Verengung
- 20: Durchmesser

- 21: Abstand
- 22: Flächenbereich
- 23: Flächenbereich
- 24: Rändelung
- 25: Rand
- 26: Durchmesser

## Patentansprüche

1. Lösbares Passverbindungselement für ein Bauteil, mit einer einen Kopf (2) und einen Schaft (3) mit einem Gewindeabschnitt (6) und einem Passabschnitt (9) aufweisenden Passschraube (1) und einem eine Durchbrechung (17) aufweisenden Stützring (14), wobei die Passschraube (1) an ihrem Schaft (3) einen Rand (11) und der Stützring (14) eine dem Rand (11) mit Überdeckung zugeordnete und in seiner Durchbrechung (17) angeordnete Verengung (19) aufweisen, die so angeordnet und bemessen sind, dass der Stützring (14) nach dem Zusammenfügen mit der Passschraube (1) an dieser drehbar und unverlierbar gehalten ist, wobei der Rand (11) am Schaft (3) der Passschraube (1) so positioniert ist, dass er sich im zusammengefügten Zustand im Innern der Durchbrechung (17) des Stützrings (14) befindet, dass die Verengung (19) in der Durchbrechung (17) des Stützrings (14) in einem dem Kopf (2) der Passschraube (1) zugekehrten Bereich angeordnet ist, und dass der Rand (11) und die Verengung (19) in ihrer Überdeckung so bemessen sind, dass Passschraube (1) und Stützring (14) unter elastisch-plastischer Verformung des Randes (11) und/oder der Verengung (19) zusammenfügbar sind.

2. Passverbindungselement nach Anspruch 1, **dadurch gekennzeichnet, dass** die Durchbrechung (17) des Stützrings (14) einen größeren Durchmesser (18) als der Durchmesser (10, 7) des Schaftes (3) und des Gewindeabschnitts (6) der Passschraube (1) aufweist.

3. Passverbindungselement nach Anspruch 1 oder 2, **dadurch gekennzeichnet, dass** die Verengung (19) in der Durchbrechung (17) des Stützrings (14) mit axialem Abstand (21) zu dem dem Kopf (2) der Passschraube (1) abgekehrten Ende des Stützrings (14) angeordnet ist.

4. Passverbindungselement nach einem der Ansprüche 1 bis 3, **dadurch gekennzeichnet, dass** der Rand (11) am Schaft (3) der Passschraube (1) in einem axialen Abstand (13) zum Kopf (2) der Passschraube (1) angeordnet ist, der kleiner als die axiale Höhe (15) des Stützrings (14) ist.

5. Passverbindungselement nach einem der Ansprüche 1 bis 4, **dadurch gekennzeichnet, dass** der radial nach außen vorspringende Rand (11) am Schaft (3) der Passschraube (1) über 360° umlaufend vorgesehen ist.

6. Passverbindungselement nach einem der Ansprüche 1 bis 5, **dadurch gekennzeichnet, dass** die radial nach innen vorspringende Verengung (19) in der Durchbrechung (17) des Stützrings (14) über 360° umlaufend vorgesehen ist.

7. Passverbindungselement nach einem der Ansprüche 1 bis 6, **dadurch gekennzeichnet, dass** der Passabschnitt (9) axial länger als die axiale Höhe (15) des Stützrings (14) gestaltet oder angeordnet ist.

8. Passverbindungselement nach einem oder mehreren der Ansprüche 1 bis 7, **dadurch gekennzeichnet, dass** der Rand (11) und/oder die Verengung (19) konische Flächenbereiche (22, 23) aufweisen.

9. Passverbindungselement nach einem oder mehreren der Ansprüche 1 bis 8, **dadurch gekennzeichnet, dass** am Schaft (3) der Passschraube (1) zwei Ränder (11, 25) und/oder in der Durchbrechung (17) des Stützrings (14) zwei Verengungen (19) angeordnet sind.

## Claims

1. Detachable close-tolerance connection unit for a component, comprising: a fitting screw (1) including a head (2), a shank (3), a threaded portion (6) and a fitting portion (9), the shank (3) including a rim element (11) and a supporting ring (14) including an opening (17) and a narrowing element (19) being located in the opening (17) and being assigned to the rim element (11) with overlapping, the screw and the supporting ring being designed and arranged to be connected to each other such that the supporting ring (14) is rotatably and captively connected to the fitting screw (1), the rim element (11) being positioned with respect to the shank (3) of the fitting screw (1) such, that the rim element in the pre-assembled position being located inside of the opening (17) of the supporting ring (14), the narrowing element (19) being located in a portion of the opening (17) of the supporting ring (14) facing the head (2) of the fitting screw (1), and the rim element (11) and the narrowing element (19) being designed and arranged with respect to the overlapping such that the fitting screw (1) and the supporting ring (14) are connectable with elastic-plastic deformation of the rim element (11) and/or the narrowing element (19) to reach a pre-assembled position.

2. Connection unit of claim 1, **characterized in that** the opening (17) of the supporting ring (14) has a diameter (18) being more than the diameter (10, 7) of the shank (3) and of the threaded portion (6) of the fitting screw (1).

3. Connection unit of claim 1 or 2, **characterized in that** the narrowing element (19) in the opening (17) of the supporting ring (14) is located at an axial distance (21) with respect to the head (2) of the fitting screw (1) not facing the end of the supporting ring (14).

4. Connection unit of one of the claims 1 to 3, **characterized in that** the rim element (11) being located at the shank (3) of the fitting screw (1) is arranged at an axial distance (13) with respect to the head (2) of the fitting screw (1) which is less than the axial height (15) of the supporting ring (14).

5. Connection unit of one of the claims 1 to 4, **characterized in that** the rim element (11) of the shank (3) of the fitting screw (1) is designed to extend about 360° of the fitting screw.

6. Connection unit of one of the claims 1 to 5, **characterized in that** the narrowing element (19) extending radial inwardly is designed to extend about 360° of the opening (17) of the supporting ring (14).

7. Connection unit of one of the claims 1 to 6, **characterized in that** the fitting portion (9) has an axial length being more than the axial height (15) of the supporting ring (14).

8. Connection unit of one or more of the claims 1 to 7, **characterized in that** the rim element (11) and/or the narrowing element (19) include conical surface portions (22, 23).

9. Connection unit of one or more of the claims 1 to 8, **characterized in that** two rim elements (11, 25) are located at the shank (3) of the fitting screw (1) and/or two narrowing elements (19) are located at the opening (17) of the supporting ring (14).

## Revendications

1. Elément de liaison à ajustement séparable pour un élément de construction, comportant une vis d'ajustement (1) comprenant une tige (3) avec un segment fileté (6) et un segment d'ajustement (6), et une bague d'appui (14) présentant un ajour (17), la vis d'ajustement (1) présentant un bord (11) sur sa tige (3) et la bague d'appui (14) présentant un rétrécissement (19) associé au bord (11) avec recouvrement et disposé dans son ajour (17), qui sont disposés et dimensionnés de manière qu'après assemblage avec la vis d'ajustement (1), la bague d'appui (14) puisse être maintenue tournante et imperdable sur celle-ci, le bord (11) étant positionné sur la tige (3) de la vis d'ajustement (1) de manière qu'à l'état assemblé, il se trouve à l'intérieur de l'ajour (17) de la bague d'appui (14), que le rétrécissement (19) dans l'ajour (17) de la bague d'appui (14) soit disposé dans une zone tournée vers la tête (2) de la vis d'ajustement (1), et que le bord (11) et le rétrécissement (19) soient dimensionnés dans leur recouvrement de manière que la vis d'ajustement (1) et la bague d'appui (14) puissent être assemblées avec déformation élastique et plastique du bord (11) et/ou du rétrécissement (19).

2. Elément de liaison à ajustement selon la revendication 1, **caractérisé en ce que** l'ajour (17) de la bague d'appui (14) présente un plus grand diamètre (18) que le diamètre (10, 7) de la tige (3) et du segment fileté (6) de la vis d'ajustement (1).

3. Elément de liaison à ajustement selon la revendication 1 ou 2, **caractérisé en ce que** le rétrécissement (19) dans l'ajour (17) de la bague d'appui (14) est disposé à distance axiale (21) de l'extrémité de la bague d'appui (14), tournée à l'opposé de la tête (2) de la vis d'ajustement (1).

4. Elément de liaison à ajustement selon l'une des revendications 1 à 3, **caractérisé en ce que** le bord (11) sur la tige (3) de la vis d'ajustement (1) est disposé à une distance axiale (13) de la tête (2) de la vis d'ajustement (1) qui est inférieure à la hauteur axiale (15) de la bague d'appui (14).

5. Elément de liaison à ajustement selon l'une des revendications 1 à 4, **caractérisé en ce que** le bord (11), faisant saillie radialement vers l'extérieur, sur la tige (3) de la vis d'ajustement (1) est prévu périphériquement sur 360°.

6. Elément de liaison à ajustement selon l'une des revendications 1 à 5, **caractérisé en ce que** le rétrécissement (19), faisant saillie radialement vers l'intérieur, dans l'ajour (17) de la bague d'appui (14), est prévu périphériquement sur 360°.

7. Elément de liaison à ajustement selon l'une des revendications 1 à 6, **caractérisé en ce que** le segment d'ajustement (9) est conçu ou disposé axialement plus long que la hauteur axiale (15) de la bague d'appui (14).

8. Elément de liaison à ajustement selon une ou plusieurs des revendications 1 à 7, **caractérisé en ce que** le bord (11) et/ou le rétrécissement (19) présente des zones de surface (22, 23) coniques.

9. Elément de liaison à ajustement selon une ou plusieurs des revendications 1 à 8, **caractérisé en ce que** sur la tige (3) de la vis d'ajustement (1) sont disposés deux bords (11, 25) et/ou dans l'ajour (17) de la bague (14), deux rétrécissements (19).
